# EUROPÄISCHE PATENTSCHRIFT

(11) **EP 0 828 070 B1**
(45) Veröffentlichungstag und Bekanntmachung des Hinweises auf die Patenterteilung: **28.06.2006**
(21) Anmeldenummer: 97109435.4
(22) Anmeldetag: 11.06.1997
(51) Int. Cl.: F02D 41/32, F02D 41/30

(54) **Vorrichtung und Verfahren zur Steuerung einer Brennkraftmaschine**
Apparatus and method of control of an internal combustion engine
Dispositif et procédé de commande d'un moteur à combustion interne

(30) Priorität: 17.08.1996 DE 19633156
(43) Veröffentlichungstag der Anmeldung: 11.03.1998
(73) Patentinhaber: ROBERT BOSCH GMBH, 70442 Stuttgart (DE)
(72) Erfinder: Koch-Gröber, 70026 Modugno-Bari (IT); Scharf, Michael, 71272 Renningen (DE)

(56) Entgegenhaltungen:
- EP-A- 0 585 746
- EP-A- 0 651 150
- US-A- 4 426 981

## Beschreibung

### Stand der Technik

Die Erfindung betrifft ein Verfahren und eine Vorrichtung zur Steuerung einer Brennkraftmaschine gemäß den Oberbegriffen der unabhängigen Ansprüche.

Ein solches Verfahren und eine solche Vorrichtung sind aus der EP-A-0585746 bekannt. Dort wird ein Verfahren und eine Einrichtung beschrieben, bei dem die Kraftstoffzumessung abhängig von einem Drucksignal gesteuert wird. Dabei hängt das Drucksignal vom Verlauf des Kraftstoffdrucks über der Zeit und/oder über der Winkelstellung einer Welle ab. Ausgehend von dem Drucksignal wird ein Signal bereitgestellt, das die Kraftstoffeigenschaften charakterisiert. Dabei wird dieses Signal ausgehend vom Überschreiten von Schwellenwerten beim Druckaufbau ermittelt.

Ferner ist aus der EP-651 150 A1 ein Verfahren bekannt, bei dem die Druckschwingungen nach der Einspritzung erfasst werden. Ausgehend von den Druckschwingungen ermittelt die Vorrichtung einen Massenkoeffizienten, der die Kraftstoffeigenschaften charakterisiert.

Ein weiteres Verfahren und eine weitere Vorrichtung sind aus der DE-OS 31 18 425 (US 4 426 981) bekannt. Dort wird eine Einrichtung beschrieben, die die Kraftstoffmenge bestimmt, die den Brennräumen einer Dieselbrennkraftmaschine zugeführt wird. Hierzu erfaßt ein Sensor den Kraftstoffdruck in einem sogenannten Elementraum und stellt ein entsprechendes Signal bereit. Abhängig von diesem Signal wird die Einspritzmenge und/oder der Einspritzbeginn sowie weitere Größen wie beispielsweise die Abgasrückführung gesteuert.

Der Verlauf des Drucks über der Zeit beziehungsweise über der Winkelstellung der Kurbel- oder Nockenwelle unterliegt starken Schwankungen. Eine Berücksichtigung der Temperatur des Kraftstoffes ist bei dieser Einrichtung nicht vorgesehen. Die Temperatur und die Zusammensetzung des Kraftstoffes haben einen erheblichen Einfluß auf die Leistungsabgabe, die Schadstoffemissionen und die Geräuschentwicklung der Brennkraftmaschine.

Es sind Einrichtungen bekannt, bei denen die Kraftstofftemperatur dadurch berücksichtigt wird, daß ein Temperatursensor vorgesehen ist, der die Temperatur des Kraftstoffes erfaßt. Dazu ist ein zusätzlicher Temperatursensor erforderlich. Insbesondere bei neueren Zumeßsystemen, wie beispielsweise bei Common-Rail-Systemen oder Pumpe-Düse-Systemen muß der Temperatursensor an geeigneter Stelle angebracht werden.

Aufgabe der Erfindung ist es Kraftstoffeigenschaften, wie beispielsweise die Temperatur und/oder die Kompressibilität des Kraftstoffes, ohne zusätzliche Sensoren zu erfassen.

### Vorteile der Erfindung

Mit der erfindungsgemäßen Vorgehensweise ist es möglich, die Kraftstoffeigenschaften, insbesondere die Temperatur des Kraftstoffes, bei der Kraftstoffzumessung ohne zusätzliche Sensoren zu berücksichtigen.

Vorteilhafte und zweckmäßige Ausgestaltungen und Weiterbildungen der Erfindung sind in den Unteransprüchen gekennzeichnet.

### Zeichnung

Die Erfindung wird nachstehend anhand der in der Zeichnung dargestellten Ausführungsformen erläutert. Es zeigen Figur 1 ein Blockschaltbild der erfindungsgemäßen Vorrichtung, Figur 2, 3 und Figur 4 zeigen verschiedene Signale über der Zeit aufgetragen, Figur 5 ein Flußdiagramm und Figur 6 ein Kennfeld.

### Beschreibung des Ausführungsbeispiels

Im folgenden wird die erfindungsgemäße Vorgehensweise am Beispiel einer Dieselbrennkraftmaschine beschrieben.

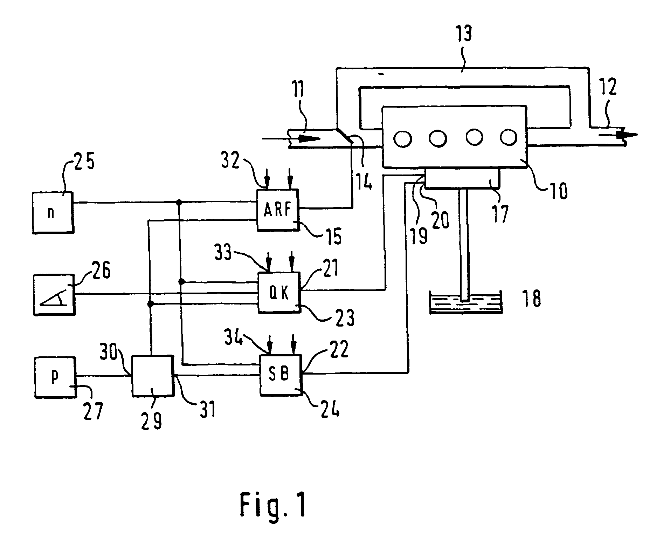

Figur 1 zeigt in grober Übersichtsdarstellung eine Brennkraftmaschine mit Selbstzündung, zusammen mit ihren wesentlichsten elektronischen Steuereinrichtungen. Mit 10 ist die Brennkraftmaschine bezeichnet, zu der ein Luftansaugrohr 11 hinführt und ein Abgasrohr 12 wegführt. Eine Abgasrückführleitung ist mit 13 bezeichnet. Der der Brennkraftmaschine 10 zugeführte Anteil von Frischluft und Abgas wird mittels einer Mischklappe 14 eingestellt, die über eine Abgasrückführsteuerstufe 15 ihr Ansteuersignal erhält.

Die Brennkraftmaschine 10 wird über eine Kraftstoffpumpe 17 mit Kraftstoff aus einem Tank 18 versorgt. Die Pumpe selbst weist bei der dargestellten Ausführungsform zwei Steuereingänge 19 und 20 für die Kraftstoffmenge und den Einspritzbeginn auf. Entsprechend stehen diese beiden Steuereingänge 19 und 20 mit den Signalausgängen 21 und 22 einer Mengensteuerstufe 23 und einer Spritzbeginnsteuerstufe 24 in Verbindung.

Bei dem dargestellten Ausführungsbeispiel handelt es sich um eine Verteilerpumpe, bei der eine Mengensteuer- und eine Spritzbeginnsteuerung vorgesehen sind. Bei neueren magnetventilgesteuerten Systemen ist ein elektrische steuerbares Ventil vorgesehen, das sowohl den Spritzbeginn als auch die Einspritzmenge steuert. In diesem Fall ist lediglich eine Steuerleitung vorgesehen, die das Ventil ansteuert. Die Mengensteuerstufe und die Spritzbeginnsteuerstufe bilden dann gemeinsam das Signal zur Beaufschlagung des Ventils.

Für das Ausführungsbeispiel sind als Eingangsgrößen der gesamten Einrichtung die Drehzahl, die Fahrpedalstellung und ein Drucksignal betreffend des einzuspritzenden Kraftstoffs wesentlich. Dementsprechend gelangt das Ausgangssignal eines Drehzahlsensors 25 zu den entsprechenden Eingängen der Abgasrückführsteuerstufe 15 der Mengen- und der Spritzbeginnsteuerstufe (23 und 24). Ein Fahrpedalpositionssignal kommt von einem entsprechenden Sensor 26 und wird auf die Kraftstoffmengensteuerstufe 23 geschaltet.

Ein Drucksensor 27 zum Erfassen des Kraftstoffdrucks gibt sein Ausgangssignal an eine Signalverarbeitungsstufe 29 ab. Sie besitzt zwei Ausgänge 30 und 31 für die eingespritzte Kraftstoffmenge und den Spritzbeginn. Entsprechend stehen diese Ausgänge 30 und 31 mit der Abgasrückführsteuerstufe 15, der Kraftstoffmengensteuerstufe 23 und der Spritzbeginnsteuerstufe 24 in Verbindung. Alle drei Steuerstufen 15, 23 und 24 weisen noch zusätzliche Eingänge 32, 33 und 34 auf, über die die einzelnen Werte zusätzlich noch beeinflußt werden können. Eine solche Einrichtung ist beispielsweise in der DE-OS 31 18 425 (US 4 426 981) beschrieben.

Bei herkömmlichen Systemen wird ausgehend von dem Druckverlauf über der Zeit t lediglich der Einspritzbeginn, das Einspritzende und damit die eingespritzte Kraftstoffmenge bestimmt. Erfindungsgemäß wurde erkannt, daß ausgehend von dem Verlauf des Druckes P im Elementraum der Kraftstoffpumpe auf weitere Kraftstoffeigenschaften, wie insbesondere die Temperatur des Kraftstoffes, geschlossen werden kann. Hierzu ist es erforderlich, daß der Verlauf des Druckes P über der Zeit t beim Druckaufbau und/oder beim Druckabbau beobachtet wird.

Bei herkömmlichen Kraftstoffpumpen, insbesondere Verteiler-und Reihenpumpen, ist ein Drucksensor erforderlich, der den Druck P im Elementraum der Pumpe erfaßt. Bei neueren Systemen, wie beispielsweise bei Pumpe-Düse- oder Pumpe-Leitungs-Düse-Systemen muß ebenfalls der Druck im Elementraum bei der Verdichtung erfaßt werden. Bei Common-Rail-Systemen muß der Druck in der Hochdruckpumpe und/oder im Rail beim Verdichten erfaßt werden.

Ausgehend von dem Druckverlauf werden Größen bestimmt, die die Kraftstoffeigenschaften charakterisieren. Dies sind insbesondere die Temperatur des Kraftstoffes, die Viskosität, die Dichte, die Schallgeschwindigkeit und das Elastizitäts-Modul des Kraftstoffes. Diese Größen werden dann von der Mengensteuerstufe 21, der Spritzbeginnsteuerstufe 22 , der Abgasrückführsteuerstufe 15 und gegebenenfalls bei weiteren Steuerstufen bei der Kraftstoffzumessung oder bei anderen Steuerungen, wie beispielsweise der Abgasrückführung, verwendet.

Vorteilhaft bei dieser Vorgehensweise ist es, daß kein zusätzlicher Temperatursensor zur Erfassung der Kraftstofftemperatur erforderlich ist. Ein entsprechender Temperatursensor kann daher eingespart werden. Es ist lediglich ein Kraftstoffdrucksensor erforderlich, der für andere Meßaufgaben benötigt wird.

Durch die Erfassung des Druckverlaufs über der Zeit im Hochdruckbereich des Einspritzsystems werden Informationen über Temperatur beziehungsweise Zustandsgleichung des Kraftstoffes gewonnen. Dies sind insbesondere für die Hydraulik relevante Kraftstoffqualitäten.

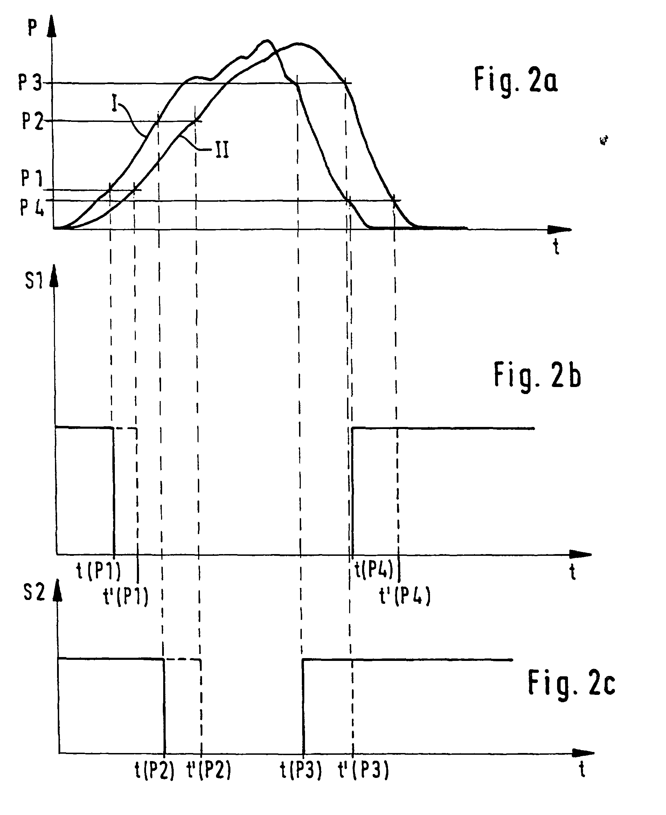

In Figur 2 sind verschiedene Signale über der Zeit aufgetragen. In Teilfigur 2a ist der Verlauf des Drucks P über der Zeit aufgetragen. In Figur 2b ist ein erstes Signal S1 und in Figur 2c ein zweites Signal S2 über der Zeit aufgetragen.

In Figur 2a sind zwei Druckverläufe, die mit I und II bezeichnet sind, über der Zeit aufgetragen. Diese Verläufe sind nur beispielhaft und können je nach Ausgestaltung der Kraftstoffpumpe andere Verläufe aufweisen. Mit I ist ein beispielhafter Wert für eine niedere Temperatur und mit II ein Verlauf bei einer höheren Temperatur eingezeichnet. Bei niederer Temperatur steigt der Druck schneller an und fällt entsprechend schneller ab. Bei hoher Temperatur steigt der Druck langsamer an und fällt langsamer ab.

Des weiteren sind in Figur 2a verschiedene Druckschwellen P1, P2, P3 und P4 eingezeichnet. Bei Überschreiten der Druckschwelle P1 wird bei herkömmlichen Systemen auf Einspritzbeginn und beim Unterschreiten einer Druckschwelle P4 auf Einspritzende erkannt.

In Teilfigur 2b ist das Signal S1 dargestellt, das bei herkömmlichen Systemen bei Überschreiten des Schwellwerts P1 und Unterschreiten des Schwellwerts P4 gebildet wird. Bei niederer Temperatur übersteigt der Druck zum Zeitpunkt t(P1) den ersten Schwellwert P1. Bei diesem Zeitpunkt fällt das Signal S1 von seinem hohen auf einen niederen Pegel ab. Dieser Abfall des Signals S1 wird von der Steuerung als Spritzbeginn erkannt. Zum Zeitpunkt t(P4) fällt der Druck P unter seinen vierten Schwellwert P4 ab. Zu diesem Zeitpunkt t(P4) steigt das Signal S1 auf seinen hohen Pegel an. Die Zeitdauer zwischen t(P1) und t(P4) wird als Einspritzdauer bezeichnet und bestimmt die eingespritzte Kraftstoffmenge.

Bei höheren Temperaturen überschreitet der Druck P erst zu einem späteren Zeitpunkt t'(P1) den Schwellwert P1. Er unterschreitet den Schwellwert P4 erst zu einem späteren Zeitpunkt t'(P4). Entsprechend fällt das Signal S1 erst zum Zeitpunkt t'(P1) ab und steigt zum Zeitpunkt t'(P4) auf seinen hohen Pegel an. Dies ist in Figur 2b mit einer gestrichelten Linie gekennzeichnet.

Bei dem dargestellten Ausführungsbeispiel verschiebt sich bei höheren Temperaturen des Kraftstoffes der Einspritzbeginn und das Einspritzende zu späteren Zeitpunkten.

Da der Einspritzbeginn und das Einspritzende von verschiedenen Betriebskenngrößen abhängt, kann diese Verschiebung des Einspritzbeginns und des Einspritzendesignals nicht zur Messung der Temperatur verwendet werden. Daher werden weitere Druckschwellen P2 und P3 eingeführt. Diese liegen vorzugsweise höher als die Druckschwellen P1 und P4. Die Druckschwelle P2 liegt im Anstieg und die Druckschwelle P3 liegt im Abfall des Drucksignals.

Beim Überschreiten der Druckschwelle P2 fällt das Signal S2 auf seinen niederen Wert ab und steigt beim Unterschreiten der Druckschwelle P3 auf seinen hohen Wert an. Entsprechend wie in Figur 2b ist in Figur 2c der Verlauf des Signals S2 bei niederer Temperatur mit durchgezogener und bei hoher Temperatur mit einer gestrichelt gezeichneten Linie gezeichnet. Bei hoher Temperatur steigt der Druck zum Zeitpunkt t(P2) über den Schwellwert P2 und fällt zum Zeitpunkt t(P3) unter den Schwellwert P3 ab.

Zur Erfassung der Kraftstoffeigenschaften können verschiedene Größen ausgewertet werden. Bei einer ersten Ausführungsform werden die Winkel- beziehungsweise die Zeitdifferenz zwischen zwei definierten Druckniveaus im Bereich des ansteigenden Drucks gemessen. Dies bedeutet, es wird beispielsweise der Abstand zwischen dem Zeitpunkt t(P1) und Zeitpunkt t(P2) beziehungsweise t'(P1) und t'(P2) ausgewertet. Das heißt, es wird der Abstand zwischen dem Überschreiten der ersten Schwelle P1 und der zweiten Schwelle P2 berücksichtigt. Bei niederen Temperaturen ist die Zeitdifferenz Δt zwischen dem Zeitpunkt t(P2) und dem Zeitpunkt t(P1) kleiner als bei hoher Temperatur.

Entsprechend können auch die Abstände zwischen zwei definierten Druckniveaus im Bereich des abfallenden Drucks gemessen werden. Dies bedeutet, es wird der Abstand zwischen dem Unterschreiten der dritten Schwelle P3 und der vierten Schwelle P4 ausgewertet. Bei niederen Temperaturen ist die Zeitdifferenz Δt* zwischen dem Zeitpunkt t(P4) und dem Zeitpunkt t(P3) kleiner als bei hoher Temperatur.

Ferner kann auch der Wert des maximalen Drucks gemessen werden. Entsprechend kann die Lage des maximalen Drucks berücksichtigt werden. In der Regel ist der maximale Druck um so größer, je niedriger die Temperatur ist. Der funktionale Zusammenhang ist von dem Typ der Pumpe abhängig und muß im Rahmen der Applikation bestimmt werden.

Eine weitere Ausgestaltung sieht vor, daß der Druckverlauf durch Integration oder Differentiation über der Zeit in einem definierten Bereich erfaßt wird. Dies bedeutet, es wird die Steigung des Drucks zu einem definierten Zeitpunkt erfaßt. Je kleiner die Temperatur, desto größer sind die Beträge der Gradienten.

Eine besonders vorteilhafte Ausgestaltung ergibt sich, wenn mit einem zusätzlichen Sensor die Temperatur gemessen und ausgehend von dem Druckverlauf eine zusätzliche Information zur Kraftstoffqualität und zum Zustand der Einspritzhydraulik bezüglich Leckraten gewonnen wird. Bei gegebener Temperatur ist die Steigung der Druckveränderung eine Funktion der Kraftstoffkompressibilität. Eine hohe Kompressibilität bedingt eine kleine Steigung. Diese Maßnahmen können einzeln oder in Kombination zur Bestimmung der Kraftstoffqualität herangezogen werden.

Der Druckverlauf über der Zeit t beziehungsweise über der Winkelstellung der Nocken und/oder der Kurbelwelle wird ausgewertet. Dabei können die Zeitpunkte oder die entsprechenden Winkelstellungen der Kurbel- und/oder Nockenwelle herangezogen werden.

Als Sensor können Sensoren verwendet werden, die ein Signal bereitstellen, das den gesamten Verlauf des Drucks anzeigt. Besonders vorteilhaft ist es, wenn Drucksensoren verwendet werden, die nur bei Überschreiten von Schwellwerten ein geändertes Ausgangssignal bereitstellen. Solche Sensoren sind besonders kostengünstig.

Beispielsweise können Sensoren eingesetzt werden, die ein in Figur 2b dargestelltes Signal bereitstellen. Beim Überschreiten einer ersten Schwelle P1 und beim Unterschreiten einer vierten Schwelle P4 wechselt das Ausgangssignal des Drucksensors von einem ersten auf einen zweiten Wert. Die erste Druckschwelle liegt üblicherweise im Bereich von 50 bar und die vierte Druckschwelle P4 im Bereich von 75 bar.

Erfindungsgemäß werden zusätzlich zwei weitere Druckschwellen definiert und deren Erreichen wird vom Sensor als Digitalsignal ausgegeben. Dazu wird der Drucksensor mit einem zweiten Digitalausgang ausgerüstet, an dem das Signal S2 anliegt. Nachteilig bei dieser Vorgehensweise ist es, daß ein zweiter Ausgang für den Sensor vorgesehen sein muß.

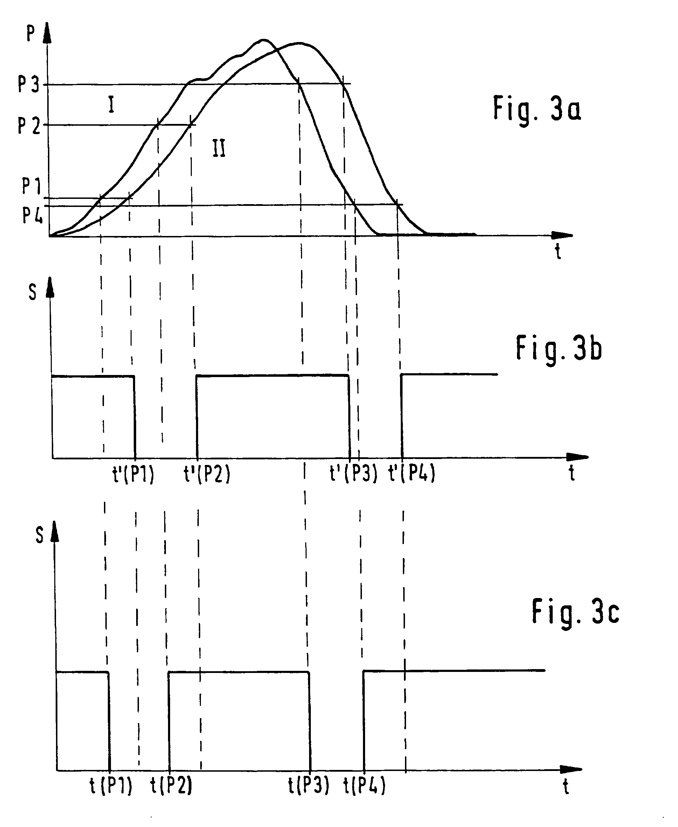

In Figur 3 ist eine Ausgestaltung dargestellt, bei der lediglich ein Ausgang des Drucksensors erforderlich ist.

In Figur 3a ist wieder der Verlauf des Druckes bei unterschiedlichen Temperaturen über der Zeit t aufgetragen. Entsprechende Druckschwellen wie in Figur 2a sind in Figur 3a entsprechend bezeichnet. Der Drucksensor ist derart ausgestaltet, daß er bei Überschreiten des ersten Schwellwertes P1 von seinem hohen auf seinen niederen Pegel und beim Überschreiten der zweiten Schwelle P2 von seinem niederen auf seinen hohen Pegel übergeht. Bei Unterschreiten der dritten Schwelle P3 geht er auf seinen niederen und beim Unterschreiten des vierten Druckwertes P4 auf seinen hohen Pegel über. Die Pegel der Signale können auch entgegengesetzt sein.

In Figur 3b ist das Ausgangssignal S des Drucksensors bei hoher Temperatur des Kraftstoffs dargestellt. Zum Zeitpunkt t'(P1) übersteigt der Druck (II) den ersten Schwellwert P1 und das Ausgangssignal S des Drucksensors fällt ab. Zum Zeitpunkt t'(P2) überschreitet der Druck den zweiten Schwellwert P2 und das Ausgangssignal S des Drucksensors steigt auf seinen hohen Pegel an. Zum Zeitpunkt t'(P3) unterschreitet der Druck den Schwellwert P3 und das Ausgangssignal S des Drucksensors fällt auf seinen niederen Pegel ab. Zum Zeitpunkt t'(P4) unterschreitet der Druck den vierten Schwellwert P4 und das Ausgangssignal S des Drucksensors steigt wieder auf seinen hohen Pegel an.

In Figur 3c ist das Signal S für niedere Temperaturen dargestellt. Zum Zeitpunkt t(P1) übersteigt der Druck (I) den ersten Schwellwert P1 und das Ausgangssignal S des Drucksensors fällt ab. Zum Zeitpunkt t(P2) überschreitet der Druck den zweiten Schwellwert P2 und das Ausgangssignal S des Drucksensors steigt auf seinen hohen Pegel an. Zum Zeitpunkt t(P3) unterschreitet der Druck den Schwellwert P3 und das Ausgangssignal S des Drucksensors fällt auf seinen niederen Pegel ab. Zum Zeitpunkt t(P4) unterschreitet der Druck den vierten Schwellwert P4 und das Ausgangssignal S des Drucksensors steigt wieder auf seinen hohen Pegel an.

Die Auswertung erfolgt entsprechend wie bei der Ausgestaltung der Figur 2. Unterschiedlich bei den zwei Ausgestaltungen ist lediglich, daß bei der Ausführungsform gemäß Figur 3 lediglich ein Ausgang für den Drucksensor vorgesehen sein muß, und bei Figur 2 müssen zwei Ausgänge vorgesehen sein. Abfallende und ansteigende Flanken des Ausgangssignals S beziehungsweise der Ausgangssignale S1 und S2 definieren die Zeitpunkte t(P1) bis t(P4).

Bei einem Drucksensor, der ein kontinuierliches Signal für den Druckverlauf liefert überprüft eine entsprechend ausgebildete Einrichtung, wann die Schwellwerte überschritten oder unterschritten werden. Die Zeitpunkt t(P1) bis t(P4) werden dann zur Temperaturermittlung ausgewertet. Bei einem kontinuierlichem Signal ist gleichfalls eine Auswertung des differenzierten und/oder integrierten Drucksignals möglich.

In den dargestellten Ausführungsformen sind alle Schwellwerte unterschiedlich. Vorteilhaft ist es auch, wenn die Schwellwerte P1 und P4 sowie die Schwellwerte P2 und P3 jeweils gleich gewählt werden.

Der in Figur 2 und Figur 3 dargestellte Druckverlauf ergibt sich nur bei Systemen, bei denen ein kontinuierlicher Druckaufbau und Druckabbau erfolgt. Insbesondere bei sogenannten Common-Rail-Systemen, wird der Druck auf einen sehr hohen Wert aufgebaut und bleibt dann in der Regel während des Betriebs der Brennkraftmaschine auf diesem erreichten Wert. Bei solchen Systemen ist lediglich eine Auswertung des Druckanstiegs während des Druckaufbaus sinnvoll.

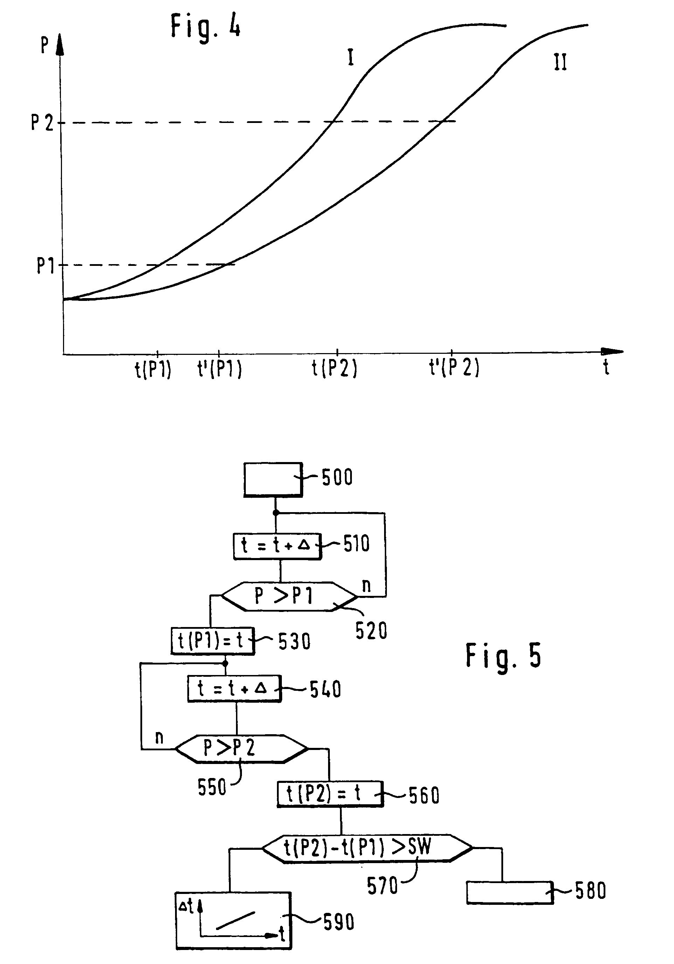

In Figur 4 ist der Verlauf des Druckes P über der Zeit t für unterschiedliche Temperaturen aufgetragen. Der Verlauf bei einer niederen Temperatur bzw. mit einem Kraftstoff mit geringer Kompressibilität ist in der Figur 4 mit I gekennzeichnet. Der Druckverlauf bei hoher Temperatur bzw. bei hoher Kompressibilität ist mit II gekennzeichnet. Bei niederer Temperatur steigt der Druck über der Zeit sehr schnell an. Dies bedeutet das Drucksignal besitzt eine große Steigung. Bei hoher Temperatur steigt der Druck langsamer an, er besitzt eine niederere Steigung.

Mit P1 und P2 sind zwei Schwellwerte für den Druck bezeichnet. Zum Zeitpunkt t(P1) überschreitet der Druck den ersten Schwellwert P1 und zum Zeitpunkt t(P2) den Schwellwert P2 bei niederer Temperatur. Bei hoher Temperatur übersteigt der Druck zum Zeitpunkt t'(P1) den ersten Schwellwert P1 und zum Zeitpunkt t'(P2) den zweiten Schwellwert P2. Durch Auswerten des Abstandes zwischen den Zeitpunkten des Überschreitens der ersten und zweiten Schwellwerte, d. h. zwischen den Zeitpunkten t(P1) und t(P2) kann auf die Temperatur geschlossen werden.

Eine mögliche Vorgehensweise zur Auswertung des Druckverlaufs ist in Figur 5 beispielhaft als Flußdiagramm dargestellt. Mit 500 startet das Programm bei jedem Neustart der Brennkraftmaschine. Im anschließenden Schritt 510 wird ein Zeitzähler t um einen vorgegebenen Wert Δ erhöht. Die sich anschließende Abfrage 520 überprüft, ob der Druck P größer als der Schwellwert P1 ist. Ist dies nicht der Fall so folgt erneut Schritt 510. Ist der Druck P größer oder gleich dem Schwellwert P1, so wird in Schritt 530 der Zeitpunkt t(P1) mit dem Wert des Zeitzählers t gesetzt.

Anschließend in Schritt 540 wird der Zeitzähler t wieder um den vorgegebenen Wert Δ erhöht. Die anschließende Abfrage 550 überprüft, ob der Druck P größer als der zweite Schwellwert P2 ist. Ist dies nicht der Fall, so wird der Zeitzähler erneut in Schritt 540 erhöht. Ist der Druck P größer oder gleich dem Schwellwert P2, so wird in Schritt 560 der Wert t(P2) mit dem Inhalt des Zeitzählers t gesetzt.

Die anschließende Abfrage 570 überprüft, ob die Differenz zwischen den Zeitpunkten t(P2) und t(P1) größer als ein Schwellwert SW ist. Ist dies der Fall, so wird in Schritt 580 auf Fehler erkannt, da der Druckanstieg zu langsam erfolgte. Ist der Differenzwert zwischen den Zeitpunkten t(P2) und t(P1) kleiner als ein Schwellwert SW, so wird in Schritt 590 ausgehend von dieser Differenz die Temperatur T bzw. die Kompressibilität des Kraftstoffes ermittelt. Vorzugsweise erfolgt dies dadurch, daß in einem Kennfeld oder in einer Kennlinie der Zusammenhang zwischen der Differenz Δt = t(P2) - t(P1) und der Temperatur T abgelegt ist. Der Wert T für die Temperatur des Kraftstoffes bzw. für die Kompressibilität des selben, wird vorzugsweise aus diesem Kennfeld ausgelesen.

Alternativ kann auch vorgesehen sein, daß unmittelbar die Steigung des Kraftstoffes durch Differenzierung des Druckverlaufs über der Zeit gewonnen wird, anstelle der Größe Δt unmittelbar die Steigung des Drucksignals zu einem vorgegebenen Zeitpunkt ausgewertet wird.

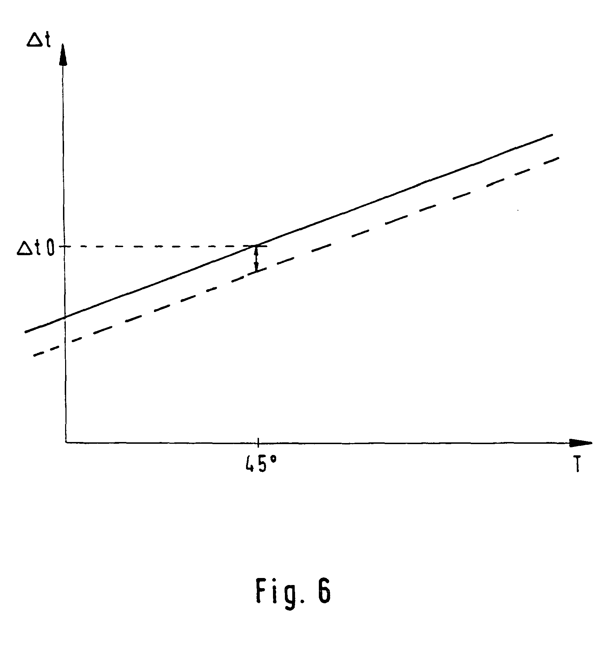

In Figur 6 ist ein Kennfeld dargestellt, das den Zusammenhang zwischen der Differenz Δt und der Temperatur T des Kraftstoffes zeigt. Der Zusammenhang zwischen der Differenz Δt und der Temperatur des Kraftstoffes ist annähernd linear. Mit steigender Temperatur wird der Abstand Δt zwischen dem Überschreiten der ersten und der zweiten Druckschwelle größer. Bei einer Normtemperatur, bei der üblicherweise die Kennfelder appliziert werden, nimmt die Differenz den Wert Δt0 an. Diese Temperatur nimmt bei der dargestellten Ausführungsform den Wert 45° an. Ausgehend von diesem Temperaturwert und dem gemessenen Wert für Δt wird die Temperatur aus dem Kennfeld ausgelesen und/oder berechnet.

Eine erhöhte Genauigkeit ergibt sich, wenn die Kennfeldwerte zusätzlich abhängig von der Drehzahl N der Brennkraftmaschine und der eingespritzten Kraftstoffmenge und/oder einer entsprechenden Größe abgelegt sind.

Problematisch ist, daß bei unterschiedlichen Pumpen und/oder Kraftstoffsorten sich bei der Normtemperatur unterschiedliche Werte für Δt ergeben. Ein solches Kennfeld ist in Figur 6 gestrichelt eingezeichnet. Um diesen Effekt auszugleichen wird der Wert für Δt bei der Normtemperatur gelernt. Hierzu wird in Betriebszuständen in denen die Temperatur bekannt ist und/oder mit anderen Sensoren, wie beispielsweise dem Kühlwassertemperatursensor, gemessen werden kann, der Wert Δt gemessen. Die Differenz zu dem Wert Δt0, der bei der Normtemperatur 45° sich ergeben sollte, wird abgespeichert. Dieser abgespeicherte Wert ist in Figur 6 mit einem Doppelpfeil gekennzeichnet. Ausgehend von diesem adaptierten Wert, dem gemessenen Wert Δt und dem bekannten Zusammenhang zwischen der Differenz Δt und der Temperatur T, das heißt der Steigung der Geraden, wird die aktuelle Temperatur berechnet.

Ist ein Temperatursensor vorgesehen, der die Kraftstofftemperatur erfaßt, so kann ausgehend von dem Wert Δt und der gemessenen Temperatur auf die Kraftstoffsorte geschlossen werden.

Besonders vorteilhaft ist es, wenn der mittels des Wertes Δt bestimmte Temperaturwert zur Überprüfung des Temperatursensors verwendet wird. Weichen die beiden Temperaturwerte um mehr als einen zulässigen Wert voneinander ab, so wird auf Defekt des Temperatursensors erkannt.

Besonders vorteilhaft ist, daß der Drucksensor Signale zur Regelung, wie beispielsweise ein Signal bezüglich des Förderbeginns und ein Signal bezüglich der Förderdauer, bereitstellt und zusätzlich noch ein Signal bereitstellt, das der Temperatur des Kraftstoffes entspricht.

Zum einen kann ein separater Kraftstofftemperatursensor eingespart werden, zum anderen ergibt sich bei der Verwendung eines zusätzlichen Temperatursensors eine erhöhte Fehlersicherheit bei einem Defekt und/oder Ausfall des Temperatursensors. Bei vorhandenem Temperatursensor können in einfacher Weise die Eigenschaften und/oder die Sorte des Kraftstoffes bestimmt werden.

Die so ermittelten Signale, insbesondere die Kraftstofftemperatur und/oder die Kraftstoffeigenschaften werden zur Steuerung und/oder Regelung verschiedener Größen der Brennkraftmaschine verwendet. Diese Größen werden insbesondere zur Steuerung und/oder Regelung der Einspritzmenge, des Einspritzbeginns, der Abgasrückführrate und/oder anderer Größen verwendet.

## Patentansprüche

1. Verfahren zur Steuerung einer Brennkraftmaschine, insbesondere einer Dieselbrennkraftmaschine, wobei ein Drucksignal bestimmt und die Kraftstoffzumessung abhängig von diesem Drucksignal gesteuert wird, wobei das Drucksignal vom Verlauf des Kraftstoffdruckes über der Zeit und/oder über der Winkelstellung einer Welle abhängt, **dadurch gekennzeichnet, dass** ausgehend von dem Verlauf des Druckes beim Druckabbau oder dem Verlauf des Druckes beim Druckaufbau und beim Druckabbau ein Signal bereitgestellt wird, das die Temperatur des Kraftstoffs charakterisiert, wobei jeweils eine erste und eine zweite Druckschwelle im Bereich des ansteigenden Drucks und/oder im Bereich des abfallenden Drucks vorgebbar sind und dass zur Bildung des Signals die Winkeldifferenz und/oder die Zeitdifferenz zwischen dem Erreichen der ersten und der zweiten Druckschwelle ausgewertet werden.

2. Verfahren nach einem der Ansprüche 1, **dadurch gekennzeichnet, dass** zur Bildung des Signals der Wert und/oder die Lage des maximalen Drucks ausgewertet werden.

3. Verfahren nach einem der Ansprüche 1, **dadurch gekennzeichnet, dass** zur Bildung des Signals der Verlauf des Drucksignals differenziert und/oder integriert wird.

4. Verfahren nach einem der vorherigen Ansprüche, **dadurch gekennzeichnet, dass** ausgehend von dem Drucksignal und einem Temperatursignal ein Signal bereitgestellt wird, das die Kraftstoffkompressibilität und/oder die Kraftstoffqualität charakterisiert.

5. Verfahren nach einem der vorherigen Ansprüche, **dadurch gekennzeichnet, dass** das Signal zur Überwachung eines Temperatursensors verwendet wird.

6. Verfahren nach einem der vorherigen Ansprüche, **dadurch gekennzeichnet, dass** das ermittelte Signal zur Steuerung und/oder Regelung verschiedener Größen der Brennkraftmaschine verwendet werden.

7. Vorrichtung zur Steuerung einer Brennkraftmaschine, insbesondere einer Dieselbrennkraftmaschine, mit Mitteln, die ein Drucksignal bestimmen und die Kraftstoffzumessung abhängig von diesem Drucksignal steuern, wobei das Drucksignal vom Verlauf des Kraftstoffdrucks über der Zeit und/oder über der Winkelstellung einer Welle abhängt, **dadurch gekennzeichnet, dass** Mittel vorgesehen sind, die ausgehend von dem Verlauf des Druckes beim Druckabbau oder dem Verlauf des Druckes beim Druckaufbau und beim Druckabbau ein Signal bereitgestellen, das die Temperatur des Kraftstoffs charakterisiert, und die jeweils eine erste und eine zweite Druckschwelle im Bereich des ansteigenden Drucks und/oder im Bereich des abfallenden Drucks vorgeben und zur Bildung des Signals die Winkeldifferenz und/oder die Zeitdifferenz zwischen dem Erreichen der ersten und der zweiten Druckschwelle auswerten.

## Claims

1. Method for controlling an internal combustion engine, in particular a diesel internal combustion engine, in which a pressure signal is determined and the metering of fuel is controlled as a function of this pressure signal, the pressure signal being dependent on the curve of the fuel pressure plotted against time and/or plotted against the angle position of a shaft, **characterized in that**, based on the curve of the pressure as the pressure is dropping or the curve of the pressure as the pressure is building up and as the pressure is dropping, a signal is provided which characterizes the temperature of the fuel, it being possible to predetermine in each case a first and a second pressure threshold in the range of the rising pressure and/or in the range of the falling pressure, and **in that** to form the signal the angle difference and/or the time difference between the first pressure threshold being reached and the second pressure threshold being reached are evaluated.

2. Method according to Claim 1, **characterized in that** to form the signal the value and/or the position of the maximum pressure are evaluated.

3. Method according to Claim 1, **characterized in that** to form the signal the curve of the pressure signal is differentiated and/or integrated.

4. Method according to one of the preceding claims, **characterized in that**, starting from the pressure signal and a temperature signal, a signal which characterizes the fuel compressibility and/or the fuel quality is provided.

5. Method according to one of the preceding claims, **characterized in that** the signal is used to monitor a temperature sensor.

6. Method according to one of the preceding claims, **characterized in that** the signal which has been determined is used to control a number of variables of the internal combustion engine.

7. Apparatus for controlling an internal combustion engine, in particular a diesel internal combustion engine, having means which determine a pressure signal and control the metering of fuel as a function of this pressure signal, the pressure signal being dependent on the curve of the fuel pressure plotted against time and/or plotted against the angle position of a shaft, **characterized in that** there are means which, based on the curve of the pressure as the pressure is dropping or the curve of the pressure as the pressure is building up and as the pressure is dropping, provide a signal which characterizes the temperature of the fuel, and which in each case predetermine a first and a second pressure threshold in the range of the rising pressure and/or in the range of the falling pressure and, to form the signal, evaluate the angle difference and/or the time difference between the first pressure threshold being reached and the second pressure threshold being reached.

## Revendications

1. Procédé de commande d'un moteur à combustion interne, en particulier, d'un moteur à combustion interne Diesel, selon lequel un signal déterminé de pression commande le dosage du carburant, le signal de pression étant fonction de l'écoulement de la pression de carburant dans le temps et/ou de la position angulaire d'un arbre,
**caractérisé en ce qu'**
un signal caractérisant la température du carburant est obtenu, à partir de l'écoulement de la pression lors de la montée de pression ou de l'écoulement de la pression lors de la réduction de pression et, lors de la réduction de pression, un premier et un second seuil de pression sont communiqués à l'avance dans la zone où la pression monte et/ou dans la zone où la pression diminue et la différence angulaire et/ ou la différence de temps entre l'atteinte du premier et du second seuil de pression étant évaluées pour former le signal.

2. Procédé selon la revendication 1,
**caractérisé en ce que**
la valeur et/ou la position de la pression maximale sont évaluées pour la formation du signal.

3. Procédé selon la revendications 1,
**caractérisé en ce que**
l'écoulement du signal de pression est différencié et/ou intégré pour la formation du signal.

4. Procédé selon l'une des revendications précédentes,
**caractérisé en ce qu'**
un signal qui caractérise la compressibilité du carburant et/ou la qualité du carburant est obtenu à partir du signal de pression et d'un signal de température.

5. Procédé selon l'une des revendications précédentes,
**caractérisé en ce que**
le signal est utilisé pour la surveillance d'un capteur de température.

6. Procédé selon l'une des revendications précédentes,
**caractérisé en ce que**
le signal détecté est utilisé pour commander et/ou régler différentes grandeurs du moteur à combustion interne.

7. Procédé de commande d'un moteur à combustion interne, en particulier, d'un moteur à combustion interne Diesel, comportant des moyens qui déterminent un signal de pression et commandent le dosage du carburant en fonction de ce signal de pression, le signal de pression étant fonction de l'écoulement de la pression de carburant dans le temps et/ou de la position angulaire d'un arbre,
**caractérisé en ce que**
des moyens sont prévus, lesquels mettent à disposition un signal caractérisant la température du carburant à partir de l'écoulement de la pression lors de la montée de pression ou de l'écoulement de la pression lors de la réduction de pression, et communiquent à l'avance respectivement un premier et un second seuil de pression dans la zone où la pression monte et/ou dans la zone où la pression diminue et évaluent la différence angulaire et/ou la différence de temps entre l'atteinte du premier et du second seuil de pression pour former le signal.
